Europäisches Patentamt

⑲ ))) European Patent Office (11) Publication number: **0 239 201**
**B1**
Office européen des brevets

(12) EUROPEAN PATENT SPECIFICATION

(45) Date of publication of the patent specification: (51) Int. Cl.⁵: **B60S 1/38**
18.07.90

(21) Application number: **87300878.3**

(22) Date of filing: **02.02.87**

(54) Air deflecting device for wiper blades.

(30) Priority: **07.02.86 FR 8601684** (73) Proprietor: **CHAMPION SPARK PLUG EUROPE S.A.,**
**Avenue Leopold III 2a, B-7120 Binche(BE)**

(43) Date of publication of application:
**30.09.87 Bulletin 87/40** (72) Inventor: **Beneteau, Christian, Rue du 131e Regiment**
**d'Infanterie, 61 54730 Gorcy(FR)**

(45) Publication of the grant of the patent:
**18.07.90 Bulletin 90/29** (74) Representative: **Crawford, Andrew Birkby et al, A.A.**
**THORNTON & CO. Northumberland House 303-306 High**
**Holborn, London WC1V 7LE(GB)**

(84) Designated Contracting States:
**BE DE GB IT**

(56) References cited:
**GB-A- 2 146 891**

**The file contains technical information submitted after**
**the application was filed and not included in this**
**specification**

## Description

The present invention relates to an air deflecting device for a wiper blade of motor vehicles or the like, the wiper blade comprising a main bridge and a wiping element reinforced by a pressure distributing device, and the air deflecting device comprising an air deflector element which extends substantially parallel to said wiper blade near the surface to be wiped and which comprises at least two connecting means for connecting it to the main bridge of the wiper blade.

Air deflecting devices of the thus defined type are well known in prior art. The French patent application 2 513 953 shows, for example, an air deflecting device which comprises all the above-mentioned characteristics. Other embodiments of similar air deflecting devices exist on the market, but all known embodiments have in common the fact that the properly so-called air deflector (air deflector element) is rigidly attached to the main bridge of the wiper blade or, possibly, to one or to several other parts of the superstructure of the wiper blade.

The disadvantage of the rigid connection between the air deflector element and the main bridge of the wiper blade is the fact that the distance between the lower edge of the deflector element and the surface to be wiped does not remain constant during the oscillating movement of the wiper blade on a windshield which has a certain curvature.

During the oscillating movement of the wiper blade not only the wiping element, but also the superstructure of the wiper blade alternatively inclines, in one and the other direction, with respect to the surface to be wiped, i.e. with respect to the windshield and this in particular on the left side (seen from the inside of the vehicle) of the windshield where the curvature is relatively important.

Since in prior art the air deflector element is rigidly connected to the superstructure of the wiper blade, its lower edge moves up and downwards with respect to the windshield as a function of the angular position of the wiper blade on the windshield or, in other words, as a function of the inclination of the superstructure of the wiper blade with respect to the windshield.

Test in wind tunnels have shown that an efficient air deflector must, as much as possible and constantly, protect the wiping element against the action of the wind which flows along the windshield. This can only be obtained satisfactorily if the distance between the lower edge of the air deflector and the windshield remains as constant as possible during the oscillating movement of the wiper blade.

The object of the invention is to provide an air deflecting device wherein this condition is satisfied, i.e. wherein the distance between the lower edge of the air deflector and the windshield remains constant when the wiper blade oscillates along the windshield.

It is to be noted that in the present description the designation "air deflector" relates only to the properly so-called deflector or air deflector element, i.e. excluding the means which connect said deflector element to the main bridge of the wiper blade, whereas the designation "air deflecting device" includes said connecting means.

The air deflecting device according to the invention is substantially characterised by the fact that the connecting means include an articulated connection comprising two inter-engaging toothed wheels which are both rotatable with respect to the main bridge about axes substantially parallel to the medium longitudinal plane of the wiper blade and of which one is rigidly connected to the deflector element and of which the other is connected to the assembly of wiping element and pressure distributing device by means of a flexible element arranged to transmit rotary motion from the assembly to the toothed wheel.

This construction allows the oscillations (inclinations with respect to the windshield) of the assembly wiping element/pressure distributing device to be transmitted to the air deflector in changing, via the two toothed wheels, the direction of rotation or of oscillation. The result is, as explained hereunder, that the oscillations (inclinations with respect to the windshield) of the assembly wiping element/pressure distributing device and of the superstructure of the wiper blade are compensated by the air deflector, i.e. that the distance between the lower edge of the air deflector and the windshield remains substantially constant during the oscillating movement of the wiper blade along the windshield.

Other characteristics of the air deflecting device according to the invention will be better understood when reading the following portions of the description in conjunction with the drawings, wherein:

– Fig. 1 is a schematic elevational view of a wiper blade to which an air deflecting device according to the invention can, for example, be attached;

– Fig. 2 is a schematic elevational view of the wiper blade of Fig. 1 to which an air deflecting device according to the invention has been attached;

– Fig. 3 is a schematic elevational view of the wiper blade and of the air deflecting device of Fig. 2, but turned by 180°;

– Fig. 4 is a sectional view, along line IV–IV of Fig. 2, showing the wiper blade in a first position;

– Fig. 5 is a sectional view, along line V–V of Fig. 2, showing the wiper blade in a second position;

– Fig. 6 is a sectional view, along line VI–VI of Fig. 2, showing the wiper blade in a third position;

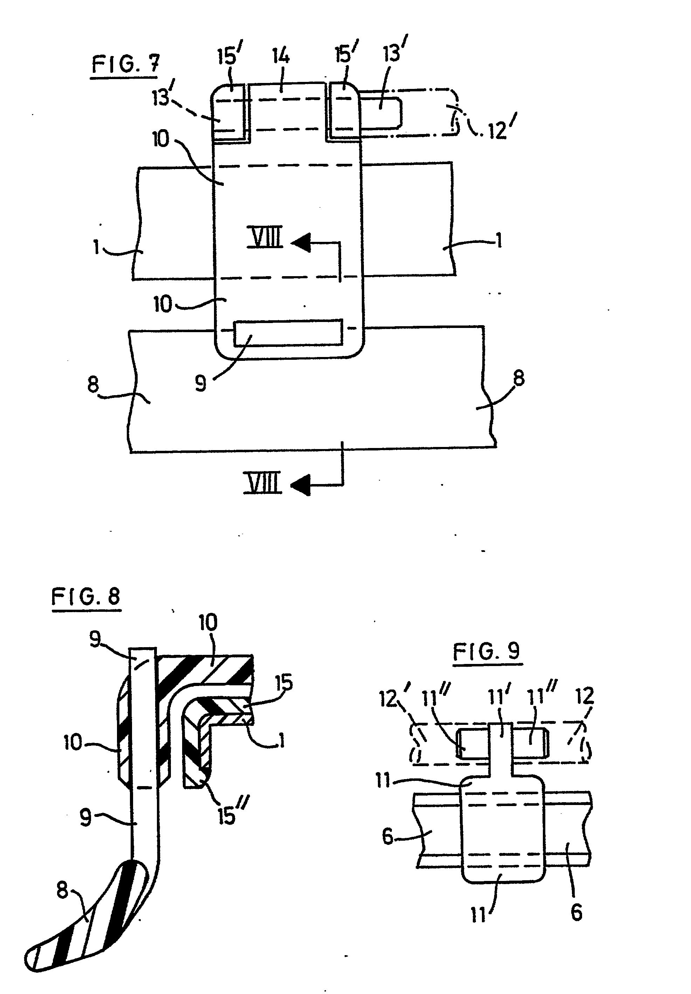

. – Fig. 7 is a top view of certain elements of the wiper blade and of the air deflecting device according to a variant of the invention;

– Fig. 8 is a sectional view, along line VIII–VIII, of the variant of Fig. 7;

– Fig. 9 is a top view of certain elements of the wiper blade and of the air deflecting device according to the invention.

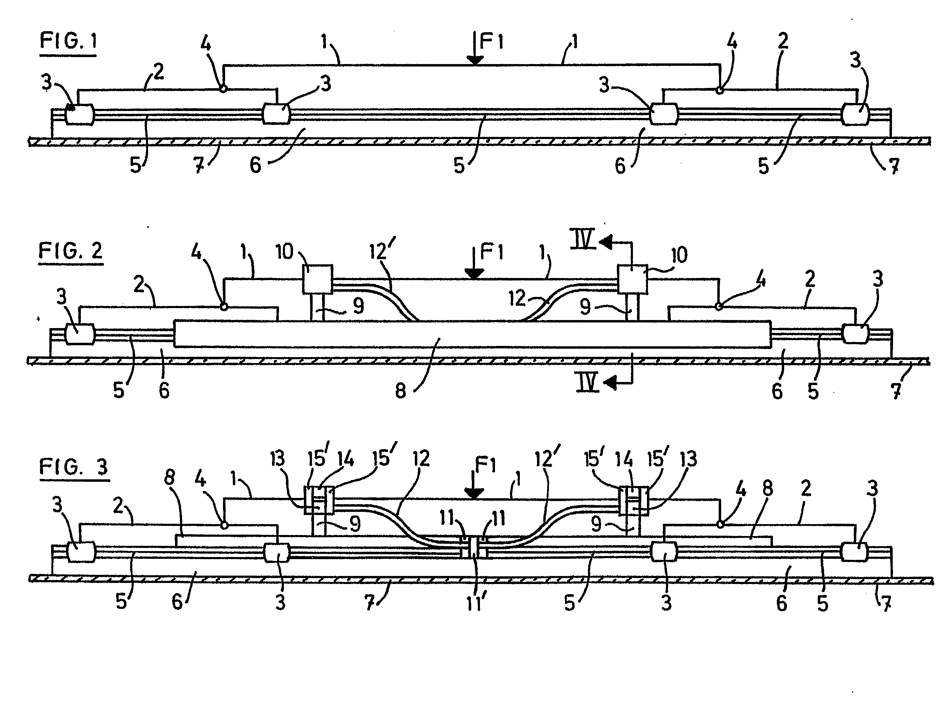

The wiper blade of Fig. 1 through 3 comprises the following elements : a main bridge 1, two secondary yokes 2 provided with the claws 3 and connected to the two extremities of the main bridge 1 via the articulations 4, a wiping element 6 which rests on the surface to be wiped 7 and a pressure distributing device 5. It is to be noted that, as known in prior art, the pressure distributing device 5 and the wiping element 6 can have various forms.

Fig. 2 and Fig. 3 schematically show the air deflecting device according to the invention as seen from both sides of the wiper blade. It substantially comprises the following elements : the air deflector element 8, the connecting means 9, 10, 13, 14, 15 for connecting the deflector element 8 to the main bridge 1 of the wiper blade and the flexible elements (for example tubes) 12, 12' which connect the elements 13 to the element 11, 11', element 11, 11' which is rigidly attached to the assembly wiping element/pressure distributing rod 6, 5.

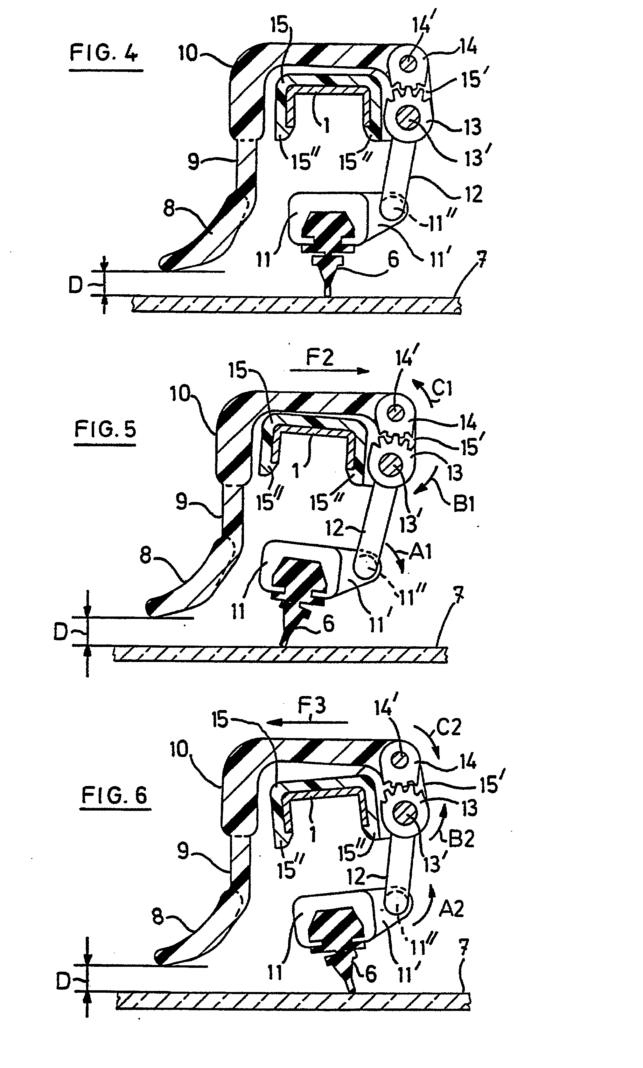

Fig. 4 through 6 show how the air deflecting device according to the invention works when the wiper blade moves along the surface to be wiped 7. During this movement the wiper arm (not shown) not only acts with a force F1 (Fig. 1 through 3), but also, depending on the direction of the movement, with a force F2 (Fig. 5) or with a force F3 (Fig. 6) on the main bridge 1 of the wiper blade. The working of the air deflecting device according to the invention will be described in detail hereunder.

On Fig. 2 through 6 it can be seen that:
- the connection between each of the connecting means 9, 10, 13, 14, 15 of the air deflector element 8 and the main bridge 1 of the wiper blade is an articulated connection comprising two toothed wheels 13, 14 of which one (13) is connected to the assembly wiping element/pressure distributing device 6, 5 by means of the flexible element 12, 12' ;
- the two toothed wheels 13, 14 of each articulated connection are located laterally with respect to the main bridge 1 of the wiper blade and on the side opposite the air deflector element 8 ;
- the axes of rotation 13', 14' of the two toothed wheels 13, 14 of each articulated connection are parallel to each other and are located in a plane which is substantially perpendicular to the surface to be wiped 7 and substantially parallel to the medium longitudinal plane of the wiper blade ;
- the axes of rotation 13', 14' of the two toothed wheels 13, 14 of each articulated connection are substantially parallel to the main bridge 1 of the wiper blade.

The toothed wheels 14 (i.e. those which are farthest away from the surface to be wiped 7) are respectively connected to the air deflector element 8 by means of the element or elements 9, 10. The elements 8, 9, 10, 14, 14' form a rigid assembly so that, when the toothed wheel 14 rotates in one or in the other direction, the air deflector 8 moves up and down with respect to the surface to be wiped 7, at least theoretically. The way the air deflector works in practice will be described hereunder.

The two toothed wheels 13 (i.e. those which are closest to the surface to be wiped 7) are rigidly connected to their respective axes or pivots 13' which, just as the axes or pivots 14', can rotate in seats (not shown) provided in the lugs 15' of the elements 15 ; elements 15 which, by means of the hooks 15'', are rigidly connected to the main bridge 1 of the wiper blade. The air deflector element 8 is thus articulated to the main bridge 1 and the articulation consists of the toothed wheels 13, 14 and of their respective axes or pivots 13' 14'.

The axes of rotation 13' of the toothed wheels 13 project somewhat from one side of the lugs 15' of the elements 15 (Fig. 7) and are connected on that side to the respective flexible elements 12, 12' (Fig. 3 and 7), so that, when the flexible elements (for example tubes) 12, 12' rotate about their longitudinal axes, this rotational movement is transmitted, in the same direction, to the two toothed wheels 13.

The flexible elements 12, 12' are connected to the assembly wiping element/pressure distributing device 6, 5 by means of the element 11 which comprises a lateral lug 11' (lateral with respect tot he wiping element 6), lug 11' which is provided with a pin 11'' extending on both sides of said lug 11' and substantially parallel to the longitudinal axis of the wiping element 6 (Fig. 3 and 9). The pin 11'' is rigidly connected to the lug 11' and the flexible elements 12, 12' are respectively connected to one or the other extremity of said pin 11''.

It is to be noted that in order to simplify the drawings the pressure distributing device 5 has not been represented in Fig 3 through 6. Moreover, as already mentioned above, the pressure distributing device may have various forms without there being an influence on the way to work of the air deflecting device according to the invention.

The way to work of the thus described air deflecting device is as follows:
- When, starting from the relative positions of all the elements of the wiper blade and of the air deflecting device shown in Fig. 4, the wiper arm (not shown) of the wiper blade acts with a force F2 (Fig. 5) on the main bridge 1, the whole wiper blade, i.e. the assembly wiping element/pressure distributing device 6, 5, the two secondary yokes 2 and the main bridge 1, take an inclined position with respect to the surface to be wiped 7.
- During this change of position the pin 11'' executes a circular movement as indicated by the arrow A1. This movement is transmitted, respectively by the flexible elements 12, 12', to the axes 13' and consequently to the toothed wheels 13. The toothed wheels 13 thus execute a rotational movement as indicated by the arrow B1 and the toothed wheels 14 execute a rotational movement in the opposite direction, as indicated by the arrow C1.
- The result of these different movements is that the air deflector element 8 compensates the inclination of the wiper blade, i.e. that the distance "D" between the lower edge of the air deflector 8 and the surface to be wiped 7 remains constant, or, in other words, said distance "D" is the same in Fig. 4 and in Fig. 5.
- The same happens, in the opposite direction, when the wiper arm (not shown) acts with a force F3 on the main bridge 1 of the wiper blade (Fig. 6). In this case the wiper blade moves from its position in Fig. 5 to its position in Fig. 6 and the pin 11'' and the toothed wheels 13, 14 respectively execute the movements indicated by the arrows A2, B2, C2. Just as before the distance "D" remains constant.

The object of the invention has thus been realized since, the distance "D" remaining constant during the oscillating movement of the wiper blade along the windshield, the air deflector element 8 constantly and efficiently protects the wiping element 6 against the action of the wind which flows along the windshield.

Fig. 7 and Fig. 8 show a variant of the air deflecting device according to the invention. In this variant the two connecting means for connecting the air deflector element 8 to the main bridge 1 of the wiper blade respectively comprise a first element 9 and a second element 10, the first element 9 being partially located in an opening provided in the second element 10. As shown in Fig. 8 the opening provided in the second element 10 has an elongate form of which the longitudinal axis is substantially perpendicular to the surface to be wiped 7.

The advantage of this variant is the fact that one single air deflector element 8 can be mounted/adapted to different types of wiper blades, in particular because the position of the deflector element can be adjusted with respect to the surface to be wiped and/or with respect to the height of the wiper blade itself.

## Claims

1. An air deflecting device for a wiper blade of motor vehicles or the like, the wiper blade comprising a main bridge (1) and a wiping element (6) reinforced by a pressure distributing device (5), the air deflecting device comprising an air deflector element (8) which in use extends substantially parallel to said wiper blade near the surface to be wiped (7) and which comprises at least two connecting means (9, 10, 13, 14, 15) for connecting it to the main bridge (1) of the wiper blade, characterised in that the connecting means (9, 10, 13, 14, 15) connecting the air deflector element (8) to the main bridge (1) of the wiper blade include an articulated connection comprising two inter-engaging toothed wheels (13, 14) which are both rotatable with respect to the main bridge about axes substantially parallel to the medium longitudinal plane of the wiper blade and of which one (14) is rigidly connected to the deflector element (8) and of which the other (13) is connected to the assembly (6, 5) of wiping element (6) and pressure distributing device (5) by means of a flexible element (12, 12′) arranged to transmit rotary motion from the assembly (6, 5) to the toothed wheel (13).

2. A device according to claim 1, characterised in that in use the two toothed wheels (13, 14) of each articulated connection are positioned at spaced locations along the main bridge (1) of the wiper blade and on the side opposite the air deflector element (8).

3. A device according to claim 3, characterised in that the axes of rotation (13′, 14′) of the two toothed wheels (13, 14) of each articulated connection are substantially parallel to the longitudinal axis of the main bridge (1) of the wiper blade.

4. A device according to claim 4, characterised in that the wheels (14) of each said pair of interengaging toothed wheels which are farthest away from the surface to be wiped (7) are respectively connected to the air deflector element (8) by at least one further element (9, 10).

5. A device according to claim 5, characterised in that the wheels (13) of each said pair of interengaging toothed wheels which are closest to the surface to be wiped (7) are rigidly attached to their respective axes of rotation (13′).

6. A device according to claim 6, characterised in that each of the at least two connecting means (9, 10, 13, 14, 15) comprises an element (15, 15′, 15″) which connects the toothed wheels (13, 14) and their respective axes of rotation (13′, 14′) to the main bridge (1) of the wiper blade.

7. A device according to claim 6, characterised in that said respective flexible elements (12, 12′) are attached to the axes of rotation of the respective toothed wheels (13) which are closest to the surface to be wiped (7).

8. A device according to claim 8, characterised in that the respective flexible elements (12, 12′) are attached to the assembly wiping element/pressure distributing device (6, 5) by means of an element (11) which comprises a pin (11″) extending laterally and substantially parallel to the longitudinal axis of the wiping element (6).

9. A device according to claim 9, characterised in that the flexible elements (12, 12′) are respectively attached to the two end portions of said pins (11″).

10. A device according to claim 1, characterised in that the at least two connecting means for connecting the air deflector element (8) to the main bridge of the wiper blade respectively comprise a first and a second element (9, 10), said first element (9) being partially located in an opening provided in the second element (10).

11. A device according to claim 11, characterised in that the opening provided in the second element (10) has an elongate form and that its longitudinal axis is substantially perpendicular to the surface to be wiped (7).

## Revendications

1. Dispositif de déflexion d'air pour un balai d'essuie-glace de véhicules à moteur et analogues, le balai d'essuie-glace comprenant un pont principal (1) un élément de balayage (6) renforcé d'un dispositif répartiteur de pression (5), le dispositif de déflexion d'air comprenant un élément déflecteur (8) qui, en cours d'utilisation, s'étend de manière sensiblement parallèle au balai d'essuie-glace précité à proximité de la surface à essuyer ou balayer (7) et qui comprend au moins deux moyens de raccord (9, 10, 13, 14, 15) pour le raccorder au pont principal (1) du balai d'essuie-glace, caractérisé en ce que les moyens de raccord ou de raccordement (9, 10, 13, 14, 15) raccordant l'élément déflecteur d'air (8) au pont principal (1) du balai d'essuie-glace comprennent un raccord articulé comprenant deux roues dentées (13, 14) qui s'engagent l'une dans l'autre, qui peuvent toutes deux tourner par rapport au pont principal autour d'axes sensiblement parallèles au plan longitudinal médian du balai d'essuie-glace et dont l'une (14) est rigidement raccordée à l'élément déflecteur (8) et l'autre (13) est raccordée à l'ensemble (6, 5) de l'élément de balayage (6) et du dispositif répartiteur de pression (5) à l'aide d'un élément souple ou flexible (12, 12') agencé pour transmettre un mouvement de rotation à partir de l'ensemble (6, 5) à la roue dentée (13).

2. Dispositif suivant la revendication 1, caractérisé en ce qu'en cours d'utilisation, les deux roues dentées (13, 14) de chaque raccord articulé sont mises en place à des endroits espacés le long du pont principal (1) du balai d'essuie-glace et au côté opposé à l'élément déflecteur d'air (8).

3. Dispositif suivant la revendication 3, caractérisé en ce que les axes de rotation (13', 14') des deux roues dentées (13, 14) de chaque raccord articulé sont sensiblement parallèles à l'axe longitudinal du pont principal (1) du balai d'essuie-glace.

4. Dispositif suivant la revendication 4, caractérisé en ce que les roues (14) de chaque paire de roues dentées qui s'engagent l'une dans l'autre sont les plus éloignées de la surface à essuyer ou balayer (7) et sont respectivement raccordées à l'élément déflecteur d'air (8) par au moins un élément complémentaire (9, 10).

5. Dispositif suivant la revendication 4, caractérisé en ce que les roues (13) de chaque paire de roues dentées qui s'engagent l'une dans l'autre, qui sont les plus proches de la surface à essuyer ou balayer (7), sont rigidement attachées à leurs axes de rotation respectifs (13').

6. Dispositif suivant la revendication 6, caractérisé en ce que chacun des au moins deux moyens de raccord ou de raccordement (9, 10, 13, 14, 15) comprend un élément (15, 15', 15") qui raccorde les roues dentées (13, 14) et leurs axes de rotation respectifs (13', 14') au pont principal (1) du balai d'essuie-glace.

7. Dispositif suivant la revendication 6, caractérisé en ce que lesdits éléments souples ou flexibles respectifs (12, 12') sont attachés aux axes de rotation des roues dentées respectives (13) qui sont les plus proches de la surface à essuyer ou balayer (7).

8. Dispositif suivant la revendication 8, caractérisé en ce que les éléments flexibles ou souples respectifs (12, 12') sont attachés à l'ensemble élément de balayage/dispositif répartiteur de pression (6, 5) par l'intermédiaire d'un élément (11) qui comprend une broche (11") s'étendant latéralement et sensiblement parallèlement à l'axe longitudinal de l'élément de balayage (6).

9. Dispositif suivant la revendication 9, caractérisé en ce que les éléments souples ou flexibles (12, 12') sont respectivement attachés aux deux parties d'extrémité desdites broches (11").

10. Dispositif suivant la revendication 1, caractérisé en ce qu'au moins deux moyens de raccordement ou de raccord pour raccorder l'élément déflecteur d'air (8) au pont principal du balai d'essuie-glace comprennent respectivement un premier et un second éléments (9, 10), ledit premier élément (9) étant partiellement logé dans une ouverture prévue dans le second élément (10).

11. Dispositif suivant la revendication 10, caractérisé en ce que l'ouverture prévue dans le second élément (10) possède une forme allongée et en ce que son axe longitudinal est sensiblement perpendiculaire à la surface à essuyer ou balayer (7).

**Patentansprüche**

1. Windableitungsvorrichtung für ein Wischerblatt eines Kraftfahrzeugs oder dgl., wobei das Wischerblatt eine Hauptbrücke (1) und ein Wischelement (6) aufweist, das durch eine Druckverteilungseinrichtung (5) verstärkt ist, wobei die Windableitungsvorrichtung ein Windableitungselement (8) aufweist, das im Gebrauchszustand im wesentlichen parallel zum Wischelement in der Nähe der zu wischenden Fläche (7) verläuft und das wenigstens zwei Verbindungseinrichtungen (9, 10, 13, 14, 15) aufweist, welche dasselbe mit der Hauptbrücke (1) des Wischelements verbinden, dadurch gekennzeichnet, daß die Verbindungseinrichtungen (9, 10, 13, 14, 15), die das Windablenkungselement (8) mit der Hauptbrücke (1) des Wischelements verbinden, eine Gelenkverbindung umfassen, die zwei ineinandergreifende, mit Zähnen versehene Räder (13, 14) aufweist, welche beide bezüglich der Hauptbrücke um Achsen im wesentlichen parallel zu der Mittellängsebene des Wischerblatts drehbar sind und von denen eines (14) starr mit dem Ableitungselement (8) verbunden ist und von denen das andere (13) mit der Anordnung (6, 5) aus Wischelement (6) und Verteilungseinrichtung (5) mit Hilfe eines flexiblen Elements (12, 12') verbunden ist, das derart ausgelegt ist, daß die Drehbewegung von der Anordnung (6, 5) auf das gezahnte Rad (13) übertragen wird.

2. Vorrichtung nach Anspruch 1, dadurch gekennzeichnet, daß im Gebrauchszustand die beiden, mit Zähnen versehenen Räder (13, 14) jeder Gelenkverbindung an im Abstand liegenden Stellen längs der Hauptbrücke (1) des Wischerblatts auf der Seite angeordnet sind, die dem Windablenkelement (8) gegenüberliegt.

3. Vorrichtung nach Anspruch 3, dadurch gekennzeichnet, daß die Drehachsen (13', 14') der beiden mit Zähnen versehenen Räder (13, 14) jeder Gelenkverbindung im wesentlichen parallel zur Längsachse der Hauptbrücke (1) des Wischerblatts sind.

4. Vorrichtung nach Anspruch 4, dadurch gekennzeichnet, daß die Räder (14) der jeweiligen beiden ineinandergreifenden und mit Zähnen versehenen Räder, die von der zu wischenden Fläche (7) am weitesten entfernt sind, jeweils mit dem Windableitungselement (8) über wenigstens ein weiteres Element (9, 10) verbunden sind.

5. Vorrichtung nach Anspruch 4, dadurch gekennzeichnet, daß die Räder (13) der jeweiligen beiden ineinandergreifenden und mit Zähnen versehenen Räder, die der zu wischenden Fläche (7) am nächsten liegen, starr an ihren zugeordneten Drehachsen (13') angebracht sind.

6. Vorrichtung nach Anspruch 5, dadurch gekennzeichnet, daß jede der wenigstens zwei Verbindungseinrichtungen (9, 10, 13, 14, 15) ein Element (15, 15', 15") aufweist, das die mit Zähnen versehenen Räder (13, 14) und ihre zugeordneten Drehachsen (13', 14') mit der Hauptbrücke (1) des Wischerblatts verbindet.

7. Vorrichtung nach Anspruch 5, dadurch gekennzeichnet, daß die jeweiligen flexiblen Elemente (12, 12') an den Drehachsen der jeweiligen, mit Zähnen versehenen Räder (13) angebracht sind, die der zu wischenden Fläche (7) am nächsten liegen.

8. Vorrichtung nach Anspruch 7, dadurch gekennzeichnet, daß die jeweiligen flexiblen Elemente (12, 12') an der Anordnung aus Wischelement/Druckverteilungseinrichtung (6, 5) mit Hilfe eines Elements (11) angebracht sind, das einen Stift (12") aufweist, der in Querrichtung und im wesentlichen parallel zur Längsachse des Wischelements (6) verläuft.

9. Vorrichtung nach Anspruch 8, dadurch gekennzeichnet, daß die flexiblen Elemente (12, 12') jeweils an den beiden Endabschnitten der Stifte (12") angebracht sind.

10. Vorrichtung nach Anspruch 1, dadurch gekennzeichnet, daß die wenigstens zwei Verbindungseinrichtungen zum Verbinden des Windableitungselements (8) mit der Hauptbrücke des Wischerblatts jeweils ein erstes und ein zweites Element (9, 10) aufweisen, wobei das erste Element (9) sich teilweise in einer Öffnung befindet, die in dem zweiten Element (10) vorgesehen ist.

11. Vorrichtung nach Anspruch 10, dadurch gekennzeichnet, daß die in dem zweiten Element (10) vorgesehene Öffnung länglich ausgelegt ist und daß ihre Längsachse im wesentlichen senkrecht zu der zu wischenden Fläche (7) ist.

FIG.1

FIG.2

FIG.3

FIG. 4

FIG. 5

FIG. 6

FIG. 7

FIG. 8

FIG. 9